# EUROPEAN PATENT APPLICATION

(11) **EP 4 671 065 A1**
(43) Date of publication of application: **31.12.2025**
(21) Application number: 24762956.1
(22) Date of filing: 01.02.2024
(51) Int. Cl.: B60W 30/06

(54) **CONTROL METHOD, APPARATUS, AND VEHICLE**

(30) Priority: 28.02.2023 CN 202310232160
(71) Applicant: Shenzhen Yinwang Intelligent Technologies Co., Ltd., Shenzhen, Guangdong 518110 (CN)
(72) Inventor: LI, Bingqi, Shenzhen, Guangdong 518129 (CN); WANG, Xinyu, Shenzhen, Guangdong 518129 (CN); XIN, Fulong, Shenzhen, Guangdong 518129 (CN); XU, Lei, Shenzhen, Guangdong 518129 (CN); ZHANG, Jiaxu, Shenzhen, Guangdong 518129 (CN); MA, Xiaokang, Shenzhen, Guangdong 518129 (CN); SONG, Jiangzhou, Shenzhen, Guangdong 518129 (CN)
(74) Representative: MERH-IP Matias Erny Reichl Hoffmann Patentanwälte PartG mbB
(86) International application number: PCT/CN2024/075302
(87) International publication number: WO 2024/179273

(57) **Abstract**

A control method is provided, and is applied to the field of intelligent driving. The method includes: A vehicle obtains a first parking trajectory and a second parking trajectory, where an end point of the first parking trajectory is a start point of the second parking trajectory, the vehicle is in a first gear in the first parking trajectory, the vehicle is in a second gear in the second parking trajectory, and the first gear is different from the second gear; and before the vehicle travels to the end point based on the first parking trajectory, controls, based on the second parking trajectory, the vehicle to steer. The control method helps improve smoothness and human-likeness in a parking process, thereby helping improve parking experience of a user. An apparatus for implementing the control method and a vehicle are further provided.

## Description

### TECHNICAL FIELD

Embodiments of this application relate to the field of intelligent driving, and more specifically, to a control method and apparatus, and a vehicle.

### BACKGROUND

Auto parking (AP) means that a vehicle is automatically parked in a parking space, to be specific, an autonomous driving system of the vehicle can help a user park the vehicle in the parking space semi-automatically or automatically. Auto parking may include auto parking assist (APA), remote parking assist (RPA), auto valet parking (AVP), and the like.

Currently, after a global trajectory is planned, the vehicle may control and track each parking trajectory segment by segment, so that the vehicle is parked in the parking space or parked out to a target position. Although tracking precision can be ensured by controlling and tracking each parking trajectory, this does not comply with human driving experience and habits, and affects parking experience of the user.

### SUMMARY

This application provides a control method and apparatus, and a vehicle, to help improve smoothness and human-likeness in a parking process, so as to help improve parking experience of a user.

The vehicle in this application may be a vehicle in a broad sense, and may be a transport means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not limited in embodiments of this application.

According to a first aspect, a control method is provided, where the method includes: obtaining a first parking trajectory and a second parking trajectory, where an end point of the first parking trajectory is a start point of the second parking trajectory, the vehicle is in a first gear in the first parking trajectory, the vehicle is in a second gear in the second parking trajectory, and the first gear is different from the second gear; and before the vehicle travels to the end point based on the first parking trajectory, controlling, based on the second parking trajectory, the vehicle to steer.

Based on the foregoing technical solution, when the vehicle is about to travel to the end point of the first parking trajectory, the second parking trajectory may be pre-targeted, so that the vehicle is controlled to steer in advance. This helps reduce time required for parking, makes a parking process more compliant with human driving experience and habits, and helps improve smoothness and human-likeness in the parking process, thereby helping improve parking experience of a user. In addition, tire wear caused by controlling, when the vehicle travels to the end point of the first parking trajectory (where a speed of the vehicle is zero), the vehicle to steer is avoided.

In some possible implementations, the obtaining a first parking trajectory and a second parking trajectory includes: obtaining information about a target parking area, a current position of the vehicle, and an obstacle around the vehicle; and determining a parking trajectory based on the information about the target parking area, the current position of the vehicle, and the obstacle around the vehicle, where the parking trajectory is a trajectory from the current position of the vehicle to the target parking area, and the parking trajectory includes the first parking trajectory and the second parking trajectory.

In some possible implementations, the target parking area may be an area in which a target parking space is located, or may be a target parking-out area.

In some possible implementations, the obtaining a first parking trajectory and a second parking trajectory includes: sending information about a target parking area, a current position of the vehicle, and an obstacle around the vehicle to a cloud server; and receiving a parking trajectory determined by the cloud server based on the information about the target parking area, the current position of the vehicle, and the obstacle around the vehicle, where the parking trajectory is a trajectory from the current position of the vehicle to the target parking area, and the parking trajectory includes the first parking trajectory and the second parking trajectory.

For example, a steering angle of a wheel corresponding to the end of the first parking trajectory is an angle obtained by deflecting clockwise by a first angle in a preset direction, and a steering angle of the wheel corresponding to the start of the second parking trajectory is an angle obtained by deflecting anticlockwise by a second angle in the preset direction. Before the vehicle travels to the end point based on the first parking trajectory, the steering angle of the wheel of the vehicle may be controlled to be adjusted to the angle obtained by deflecting anticlockwise by the second angle in the preset direction. The preset direction may be a direction in which a center line of a tire is located when the vehicle travels straight.

With reference to the first aspect, in some implementations of the first aspect, the controlling, based on the second parking trajectory, the vehicle to steer includes: reversing the second parking trajectory in a first direction to obtain a first reversal trajectory, where the first direction is perpendicular to a tangent direction at the end point of the first parking trajectory; and controlling, based on the first reversal trajectory, the vehicle to steer.

Based on the foregoing technical solution, the vehicle may reverse the second parking trajectory in the first direction to obtain the first reversal trajectory. Therefore, the first reversal trajectory may be used as an extension trajectory of the first parking trajectory. In this way, when the vehicle is about to travel to the end point of the first parking trajectory, the vehicle may be controlled to steer in advance based on the first reversal trajectory. This helps reduce the time required for parking, makes the parking process more compliant with human driving experience and habits, and helps improve smoothness and human-likeness in the parking process, thereby helping improve parking experience of the user. In addition, tire wear caused by controlling, when the vehicle travels to the end point of the first parking trajectory (where the speed of the vehicle is zero), the vehicle to steer is avoided.

With reference to the first aspect, in some implementations of the first aspect, the method further includes: before the vehicle travels to the end point based on the first parking trajectory, controlling, based on the second parking trajectory, the vehicle to shift from the first gear to the second gear.

Based on the foregoing technical solution, when the vehicle is about to travel to the end point of the first parking trajectory, the vehicle may be controlled to shift a gear while performing steering wheel turning. This helps reduce the time required for parking, makes the parking process more compliant with human driving experience and habits, and helps improve smoothness and human-likeness in the parking process, thereby helping improve parking experience of the user. In addition, tire wear caused by controlling, when the vehicle travels to the end point of the first parking trajectory (where the speed of the vehicle is zero), the vehicle to steer is avoided.

With reference to the first aspect, in some implementations of the first aspect, the controlling, based on the second parking trajectory, the vehicle to steer includes: when the vehicle shifts from the first gear to the second gear, controlling, based on the second parking trajectory, the vehicle to steer.

With reference to the first aspect, in some implementations of the first aspect, before the vehicle is controlled to perform a gear shift operation, the method further includes: determining that a speed of the vehicle is less than or equal to a preset speed.

Based on the foregoing technical solution, before the gear shift operation is performed, it may be first determined that the speed of the vehicle is less than or equal to the preset speed. In this way, vehicle body vibration caused by an excessively high vehicle speed during gear shifting of the vehicle is avoided. This helps improve parking experience of the user.

For example, the preset speed is 0.2 m/s.

With reference to the first aspect, in some implementations of the first aspect, before the obtaining a first parking trajectory and a second parking trajectory, the method further includes: detecting that an auto parking function is enabled.

In some possible implementations, the auto parking function includes an APA function, an RPA function, an AVP function, or an auto parking space parking-out function.

With reference to the first aspect, in some implementations of the first aspect, before the vehicle travels to the end point based on the first parking trajectory, the controlling, based on the second parking trajectory, the vehicle to steer includes: when a distance between the vehicle and the end point is less than or equal to a preset distance, controlling, based on the second parking trajectory, the vehicle to steer; or when remaining parking duration during which the vehicle travels to the end point is less than or equal to preset duration, controlling, based on the second parking trajectory, the vehicle to steer.

In some possible implementations, the preset distance may be 20 centimeters (centimeters, cm).

In some possible implementations, the preset duration may be 1 second (second, s).

The remaining parking duration may be parking duration required from a position of the vehicle to the end point of the first parking trajectory in a process of traveling along the first parking trajectory.

According to a second aspect, a control apparatus is provided. The apparatus includes: an obtaining unit, configured to obtain a first parking trajectory and a second parking trajectory, where an end point of the first parking trajectory is a start point of the second parking trajectory, a vehicle is in a first gear in the first parking trajectory, the vehicle is in a second gear in the second parking trajectory, and the first gear is different from the second gear; and a control unit, configured to: before the vehicle travels to the end point based on the first parking trajectory, control, based on the second parking trajectory, the vehicle to steer.

With reference to the second aspect, in some implementations of the second aspect, the control unit is configured to: reverse the second parking trajectory in a first direction to obtain a first reversal trajectory, where the first direction is perpendicular to a tangent direction at the end point of the first parking trajectory; and control, based on the first reversal trajectory, the vehicle to steer.

With reference to the second aspect, in some implementations of the second aspect, the control unit is further configured to: before the vehicle travels to the end point based on the first parking trajectory, control, based on the second parking trajectory, the vehicle to shift from the first gear to the second gear.

With reference to the second aspect, in some implementations of the second aspect, the apparatus further includes: a determining unit, configured to: before the vehicle is controlled to perform a gear shift operation, determine that a speed of the vehicle is less than or equal to a preset speed.

With reference to the second aspect, in some implementations of the second aspect, the apparatus further includes: a detection unit, configured to: before the obtaining unit obtains the first parking trajectory and the second parking trajectory, detect that an auto parking function is enabled.

With reference to the second aspect, in some implementations of the second aspect, the control unit is configured to: when a distance between the vehicle and the end point is less than or equal to a preset distance, control, based on the second parking trajectory, the vehicle to steer; or when remaining parking duration during which the vehicle travels to the end point is less than or equal to preset duration, control, based on the second parking trajectory, the vehicle to steer.

According to a third aspect, this application provides a control apparatus. The apparatus includes a processing unit and a storage unit. The storage unit is configured to store instructions. The processing unit executes the instructions stored in the storage unit, for the apparatus to perform any possible control method according to the first aspect.

According to a fourth aspect, this application provides a control system. The control system includes a sensor and a computing platform. The computing platform includes any possible control apparatus in the second aspect, or includes the control apparatus in the third aspect.

According to a fifth aspect, this application provides a vehicle. The vehicle includes any possible control apparatus in the second aspect, or includes the control apparatus in the third aspect, or includes the control system in the fourth aspect.

According to a sixth aspect, this application provides a computer program product. The computer program product includes computer program code, and when the computer program code is run on a computer, the computer is enabled to perform any possible control method in the first aspect.

It should be noted that all or some of the computer program code may be stored in a first storage medium. The first storage medium may be packaged together with a processor, or may be packaged separately from a processor. This is not specifically limited in embodiments of this application.

According to a seventh aspect, this application provides a computer-readable medium. The computer-readable medium stores program code, and when the computer program code is run on a computer, the computer is enabled to perform any possible control method in the first aspect.

According to an eighth aspect, this application provides a chip. The chip includes a circuit. The circuit is configured to perform any possible control method in the first aspect.

### BRIEF DESCRIPTION OF DRAWINGS

FIG. 1 is a functional block diagram of a vehicle according to an embodiment of this application;
FIG. 2(a) to FIG. 2(c) are a diagram of a parking scenario;
FIG. 3(a) and FIG. 3(b) are a diagram of a parking scenario according to an embodiment of this application;
FIG. 4 is a schematic flowchart of a control method according to an embodiment of this application;
FIG. 5 is another diagram of a parking scenario according to an embodiment of this application;
FIG. 6 is another schematic flowchart of a control method according to an embodiment of this application; and
FIG. 7 is a block diagram of a control apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one item" means one or more items. For example, "at least one of A and B", similar to "A and/or B", describes an association relationship between associated objects and represents that three relationships may exist. For example, at least one of A and B may represent the following three cases: Only A exists, both A and B exist, and only B exists.

Prefix words "first", "second", and the like in embodiments of this application are merely intended to distinguish between different described objects, and impose no limitation on locations, sequences, priorities, quantities, content, or the like of the described objects. In embodiments of this application, use of the prefix words, for example, an ordinal number, used to distinguish between the described objects does not constitute a limitation on the described objects. For descriptions of the described objects, refer to the descriptions of the context in the claims or embodiments. The use of such prefix words should not constitute a redundant limitation. In addition, in the descriptions of embodiments, unless otherwise specified, "a plurality of" means two or more.

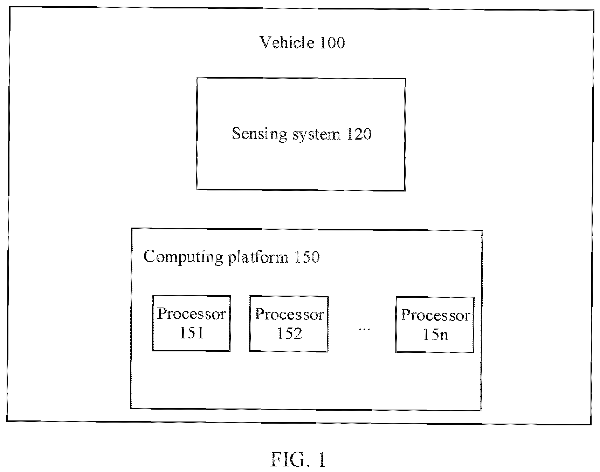

FIG. 1 is a functional block diagram of a vehicle 100 according to an embodiment of this application. The vehicle 100 may include a sensing system 120 and a computing platform 150. The sensing system 120 may include one or more sensors that sense information about an ambient environment of the vehicle 100. For example, the sensing system 120 may include a positioning system. The positioning system may be a global positioning system (GPS), a BeiDou system, or another positioning system. The sensing system 120 may further include one or more of an inertial measurement unit (IMU), a lidar, a millimeter-wave radar, an ultrasonic radar, and a camera apparatus.

Some or all functions of the vehicle 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (CPU), a microprocessor, a graphics processing unit (GPU) (which may be understood as a microprocessor), or a digital signal processor (DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (ASIC) or a programmable logic device (PLD), for example, a field programmable gate array (FPGA). In the reconfigurable hardware circuit, a process in which the processor loads a configuration document to implement hardware circuit configuration may be understood as a process in which the processor loads an instruction to implement functions of some or all of the foregoing units. In addition, the processor may alternatively be a hardware circuit designed for artificial intelligence, and may be understood as an ASIC, for example, a neural network processing unit (NPU), a tensor processing unit (TPU), or a deep learning processing unit (DPU). In addition, the computing platform 150 may further include a memory. The memory is configured to store instructions. Some or all of the processors 151 to 15n may invoke the instructions in the memory, to implement a corresponding function.

Currently, after a global trajectory is planned, a vehicle may control and track each parking trajectory segment by segment, so that the vehicle is parked in a parking space or parked out to a target position. Although tracking precision can be ensured by controlling and tracking each parking trajectory, this does not comply with human driving experience and habits, and affects parking experience of a user.

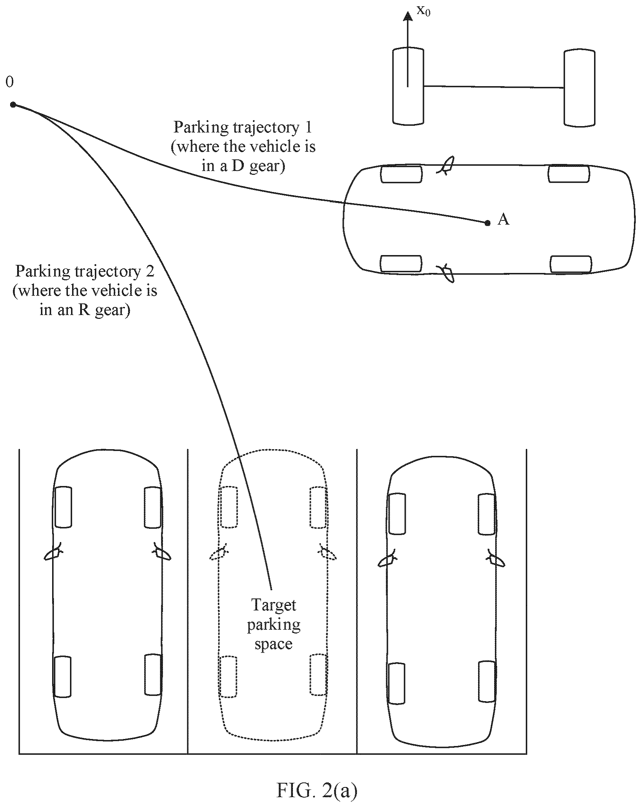

FIG. 2(a) to FIG. 2(c) are a diagram of a parking scenario.

As shown in FIG. 2(a), a vehicle is located at a parking start point (for example, a position A), and a parking space to be parked in is a target parking space. The vehicle may plan a parking trajectory from the position A to the target parking space based on information about the position A, a position of the target parking space, and an obstacle around the vehicle, and divide the parking trajectory into a parking trajectory 1 and a parking trajectory 2. The parking trajectory 1 is a trajectory along which the vehicle moves forward in a D gear, and the parking trajectory 2 is a trajectory along which the vehicle reverses to park in the target parking space in an R gear. A boundary point of the parking trajectory 1 and the parking trajectory 2 is a position O. When the vehicle is at the parking start point, a steering angle of a wheel is an included angle (for example, 0°) between a center line of a tire and a preset direction x₀, where the preset direction is a direction of the center line of the tire in a case in which the vehicle travels straight.

The position A may be a center point of a projection of the vehicle on the ground in a case in which the vehicle is at the parking start point, and the position O may be a center point of a projection of the vehicle on the ground in a case in which the vehicle is at a gear shift point.

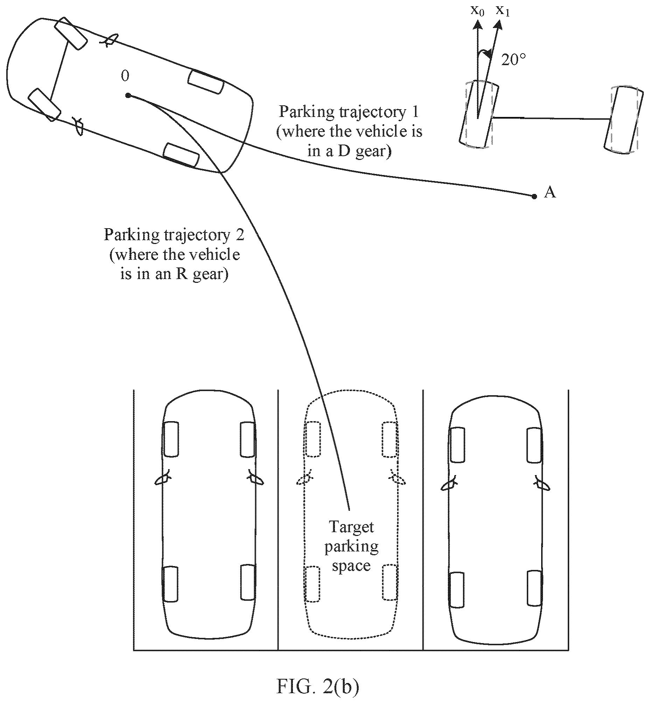

As shown in FIG. 2(b), when the vehicle travels to the position O along the parking trajectory 1, the vehicle may control, based on a transverse steering angle instruction corresponding to the parking trajectory 1, the steering angle of the wheel to be +20° ("+20°" indicates that the wheel deflects clockwise by 20° from the preset direction x₀).

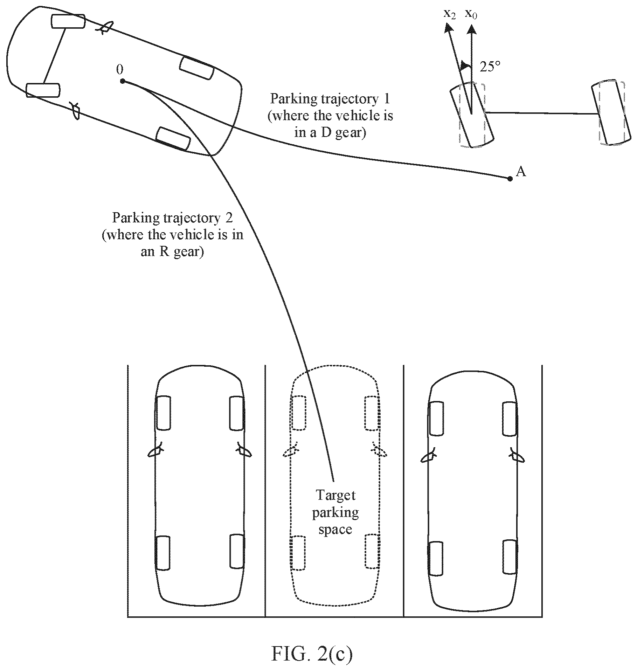

As shown in FIG. 2(c), when the vehicle travels to the position O along the parking trajectory 1, the vehicle may switch to a next parking trajectory (the parking trajectory 2). In this case, the vehicle may control, based on a transverse steering angle instruction corresponding to the parking trajectory 2, the steering angle of the wheel to be -25° ("-25°" indicates that the wheel deflects anticlockwise by 25° from the preset direction x₀).

When traveling to the position O along the parking trajectory 1, the vehicle needs to switch to the parking trajectory 2. To ensure transverse tracking precision, the vehicle needs to turn a steering wheel in-situ, and shift a gear to start again, to track the parking trajectory 2. This manner can ensure tracking precision, but overall parking experience is compromised by the technical solution, and the entire parking trajectory is divided into two segments. This does not comply with human driving experience and habits. When the vehicle travels to an end point of the parking trajectory 1 and prepares to switch to the parking trajectory 2, a transverse steering angle corresponding to the parking trajectory 1 differs greatly from a transverse steering angle corresponding to the parking trajectory 2. Therefore, when the vehicle travels to the position O, the steering angle of the wheel needs to be adjusted in-situ, so that an adjusted steering angle of the wheel satisfies the transverse steering angle corresponding to the parking trajectory 2. Adjusting the steering angle of the wheel in-situ affects smoothness and human-likeness during parking. In addition, adjusting the steering angle of the wheel in-situ also causes tire wear.

This application provides a control method and apparatus, and a vehicle. A transverse steering angle instruction of a next parking trajectory is pre-targeted at an end of a previous parking trajectory, so that a vehicle is controlled to steer in advance. In this way, a case in which the vehicle is controlled, based on the next trajectory, to steer only when the vehicle arrives at a gear shift point is avoided. This helps reduce time required for parking, makes a parking process more compliant with human driving experience and habits, and helps improve smoothness and human-likeness in the parking process, thereby helping improve parking experience of a user. In addition, tire wear caused by controlling, when the vehicle travels to an end point of a first parking trajectory (where a speed of the vehicle is zero), the vehicle to steer, is avoided.

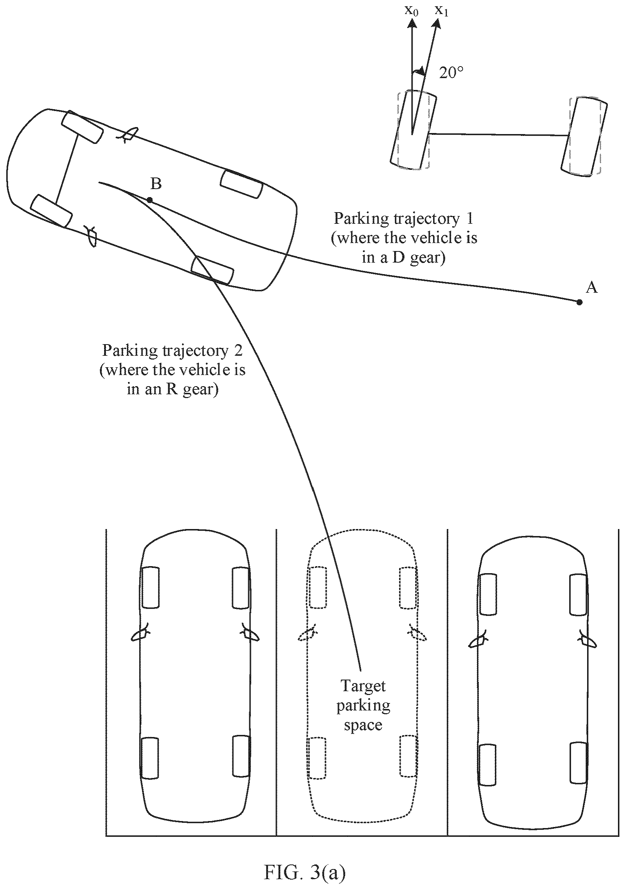

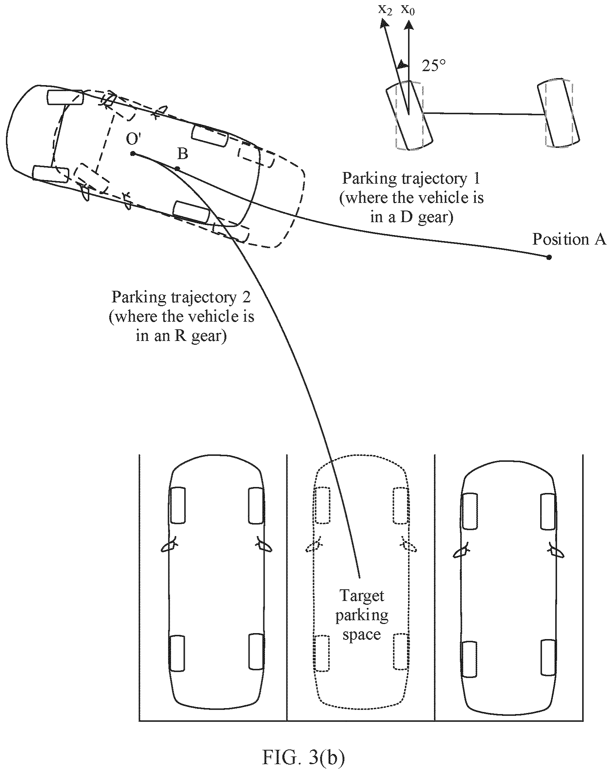

FIG. 3(a) and FIG. 3(b) are another diagram of the parking scenario according to an embodiment of this application.

As shown in FIG. 3(a), when the vehicle travels to a position B (a position ahead the position O) along the parking trajectory 1, the steering angle of the wheel is +20°. The vehicle may adjust the steering angle of the wheel in advance based on the transverse steering angle instruction corresponding to the parking trajectory 2. For example, if a transverse steering angle corresponding to the start of the parking trajectory 2 is -25°, the vehicle may control the steering angle of the wheel to be adjusted from +20° to -25° in a process of traveling from the position B to the position O.

In an embodiment, a distance between the position B and the position O is a preset distance. For example, the preset distance is 20 cm.

In an embodiment, travel duration required for traveling from the position B to the position O is preset duration. For example, the preset duration is 1s.

In an embodiment, the vehicle may alternatively shift a gear from a D gear to an R gear at the position B. After shifting the gear from the D gear to the R gear, the vehicle may further travel from the position B to a position O'. In this case, the vehicle has performed a gear shift operation before traveling to the position O'. In this way, a case in which the vehicle performs the gear shift operation only when traveling to the position O' is avoided. This helps reduce parking duration, and helps improve parking experience of the user.

In an embodiment, before shifting the gear from the D gear to the R gear, the vehicle may determine that the speed of the vehicle is less than or equal to a preset speed.

In an embodiment, when the speed of the vehicle is less than or equal to the preset speed, the vehicle may be controlled to shift the gear from the D gear to the R gear. In this case, the vehicle may continue to travel forward to the position O'. When arriving the position O', the vehicle may be controlled to reverse to park in the target parking space.

In an embodiment, when the vehicle is controlled to shift the gear from the D gear to the R gear, the vehicle may be controlled to switch from tracking the parking trajectory 1 to tracking the parking trajectory 2. Therefore, the vehicle is controlled, based on the parking trajectory 2, to steer. In this way, a parking trajectory can be switched in advance, and it can also be ensured that gear shifting is performed while steering wheel turning is performed during trajectory switching. This helps improve smoothness and human-likeness during gear shifting.

For example, the preset speed is 0.2 m/s.

An initially planned gear shift point of the vehicle is the position O. Before traveling to the position O, the vehicle steers based on the transverse steering angle corresponding to the parking trajectory 2, and cannot travel to the position O based on the parking trajectory 1. Because the position B is close to the position O, a distance between the position O and the position O' may be very short, or on a premise that an error between an actual parking trajectory of the vehicle and the planned parking trajectory is small, the vehicle may be controlled to switch the parking trajectory in advance, and the vehicle is controlled to perform gear shifting while performing steering wheel turning during parking trajectory switching. This helps reduce time required for parking and improve parking efficiency. In addition, smoothness and human-likeness during parking are improved on a premise of ensuring control and tracking precision. This helps improve parking experience of the user.

As shown in FIG. 3(b), when the vehicle travels from the position B to the position O', the steering angle of the wheel is adjusted from +20° to -25°. In this case, the vehicle may be directly controlled, based on the parking trajectory 2, to park in the target parking space.

In FIG. 2(a) to FIG. 3(b), an example in which the vehicle is parked in the target parking space is used for description. This embodiment of this application is not limited thereto. For example, this embodiment of this application may also be applied to a scenario in which the vehicle is parked out of a parking space.

In FIG. 2(a) to FIG. 3(b), an example in which an entire parking trajectory along which the vehicle is parked in the target parking space is divided into the parking trajectory 1 and the parking trajectory 2 is used for description. This embodiment of this application is not limited thereto. For example, the entire parking trajectory of the vehicle may be further divided into the parking trajectory 1, the parking trajectory 2, a parking trajectory 3, and a parking trajectory 4. The vehicle is in the D gear in the parking trajectory 1, the vehicle is in the R gear in the parking trajectory 2, the vehicle is in the D gear in the parking trajectory 3, and the vehicle is in the R gear in the parking trajectory 4. Before the vehicle travels to a boundary point of the parking trajectory 2 and the parking trajectory 3, the vehicle may also be controlled, based on a transverse steering angle corresponding to the parking trajectory 3, to steer in advance. Alternatively, before the vehicle travels to a boundary point of the parking trajectory 2 and the parking trajectory 3, the vehicle may perform a gear shift operation in advance.

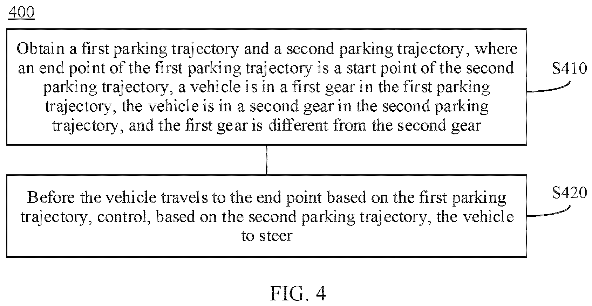

FIG. 4 is a schematic flowchart of a control method 400 according to an embodiment of this application. The method 400 may be performed by the vehicle 100 shown in FIG. 1, or the method 400 may be performed by the computing platform 150, or the method 400 may be performed by a system including the computing platform 150 and a sensor, or the method 400 may be performed by a system-on-a-chip (SoC) on the computing platform 150, or the method 400 may be performed by a processor on the computing platform 150. The following uses an example in which an execution body is a vehicle for description. The method 400 includes the following steps.

S410: Obtain a first parking trajectory and a second parking trajectory, where an end point of the first parking trajectory is a start point of the second parking trajectory, the vehicle is in a first gear in the first parking trajectory, the vehicle is in a second gear in the second parking trajectory, and the first gear is different from the second gear.

For example, the first parking trajectory may be the parking trajectory 1, and the second parking trajectory may be the parking trajectory 2. For example, the vehicle is in a D gear in the parking trajectory 1, and the vehicle is in an R gear in the parking trajectory 2.

That an end point of the first parking trajectory is a start point of the second parking trajectory may also be understood as that the first parking trajectory and the second parking trajectory are two adjacent parking trajectories in an entire parking trajectory of the vehicle.

S420: Before the vehicle travels to the end point based on the first parking trajectory, control, based on the second parking trajectory, the vehicle to steer.

For example, before the vehicle travels to a position O, the vehicle may be controlled, based on the parking trajectory 2, to steer.

Optionally, the controlling, based on the second parking trajectory, the vehicle to steer includes: reversing the second parking trajectory in a first direction to obtain a first reversal trajectory, where the first direction is perpendicular to a tangent direction at the end point of the first parking trajectory; and controlling, based on the first reversal trajectory, the vehicle to steer.

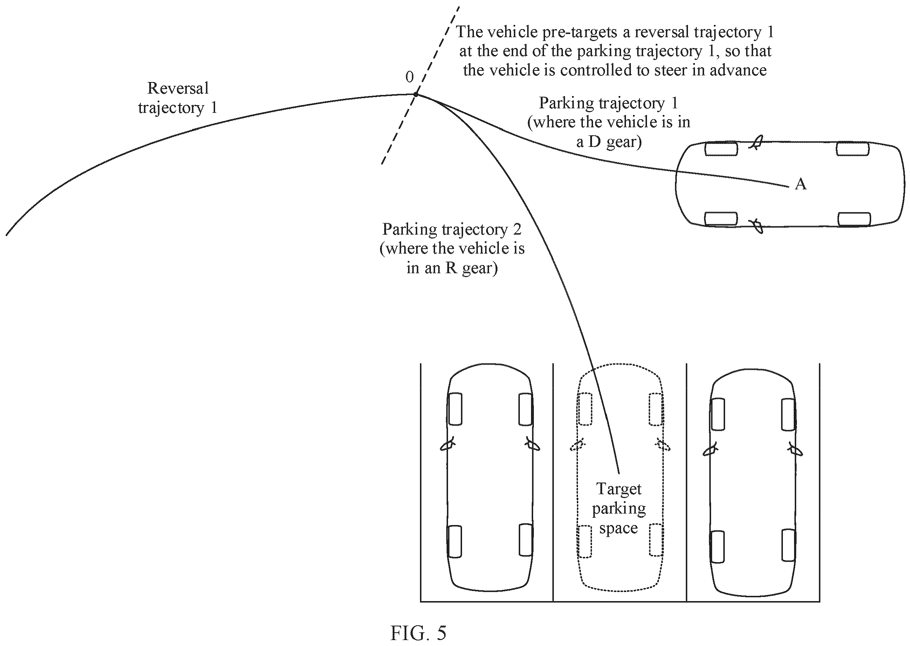

FIG. 5 is another diagram of the parking scenario according to an embodiment of this application.

As shown in FIG. 5, after obtaining the parking trajectory 1 and the parking trajectory 2, the vehicle may reverse the parking trajectory 2 in the first direction to obtain a reversal trajectory 1. Before the vehicle travels to the position O, the vehicle may be controlled, based on the reversal trajectory 1, to steer, so that a steering angle of the wheel in a case in which the vehicle arrives at the position O matches a steering angle of the wheel corresponding to the parking trajectory 2, and the vehicle does not need to be controlled to steer at the position O. This also helps improve smoothness and human-likeness during parking, thereby helping improve parking experience of the user.

The first reversal trajectory may be the reversal trajectory 1.

Optionally, the method 400 further includes: before the vehicle travels to the end point based on the first parking trajectory, controlling, based on the second parking trajectory, the vehicle to shift from the first gear to the second gear.

Optionally, before the vehicle is controlled to perform a gear shift operation, the method 400 further includes: determining that a speed of the vehicle is less than or equal to a preset speed.

Optionally, the controlling, based on the second parking trajectory, the vehicle to steer includes: when the vehicle shifts from the first gear to the second gear, controlling, based on the second parking trajectory, the vehicle to steer.

For example, when the vehicle travels along a second half of the first parking trajectory, if the speed of the vehicle is less than or equal to the preset speed, the vehicle may be controlled to shift from the first gear to the second gear and switch from controlling tracking of the first parking trajectory to controlling tracking of the second parking trajectory. In addition, when the vehicle shifts from the first gear to the second gear, the vehicle may be controlled, based on the second parking trajectory, to steer.

Optionally, before the obtaining a first parking trajectory and a second parking trajectory, the method 400 further includes: detecting that an auto parking function is enabled.

For example, the detecting that an auto parking function is enabled includes: detecting an input that the user taps a control corresponding to auto parking; or detecting that the user sends a voice instruction corresponding to auto parking.

Optionally, before the vehicle travels to the end point based on the first parking trajectory, the controlling, based on the second parking trajectory, the vehicle to steer includes: when a distance between the vehicle and the end point is less than or equal to a preset distance, controlling, based on the second parking trajectory, the vehicle to steer; or when remaining parking duration during which the vehicle travels to the end point is less than or equal to preset duration, controlling, based on the second parking trajectory, the vehicle to steer.

For example, the preset distance is 20 cm.

For example, the preset duration is 1s.

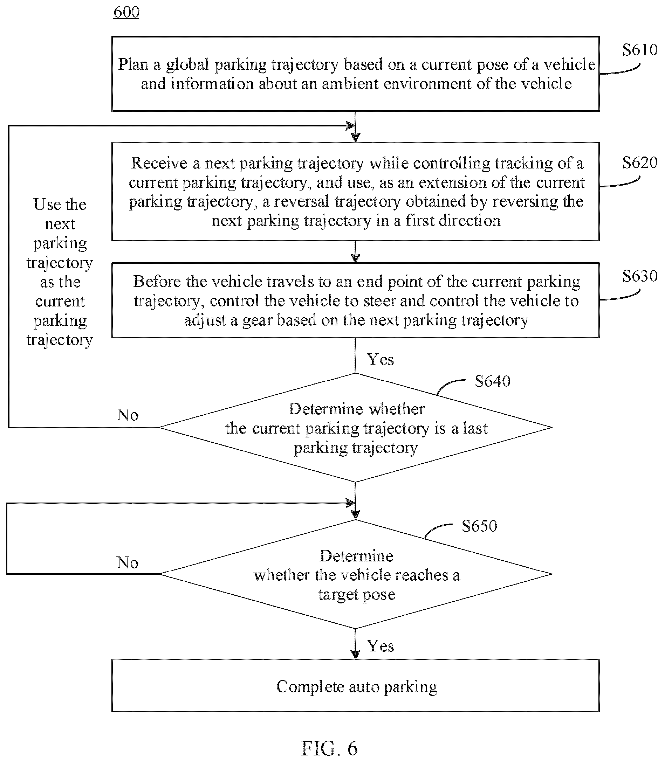

FIG. 6 is a schematic flowchart of a control method 600 according to an embodiment of this application. The method 600 may be performed by the vehicle 100 shown in FIG. 1, or the method 600 may be performed by the computing platform 150, or the method 600 may be performed by a system including the computing platform 150 and a sensor, or the method 600 may be performed by a SoC on the computing platform 150, or the method 600 may be performed by a processor on the computing platform 150. The following uses an example in which an execution body is a vehicle for description. The method 600 includes the following steps.

S610: Plan a global parking trajectory based on a current pose of the vehicle and information about an ambient environment of the vehicle.

For example, the vehicle is parked in a target parking space. The information about the ambient environment of the vehicle includes information about the target parking space and information about an obstacle (for example, a column, or a vehicle parked in a parking space around the target parking space) around the vehicle.

S620: Receive a next parking trajectory while controlling tracking of a current parking trajectory, and use, as an extension of the current parking trajectory, a reversal trajectory obtained by reversing the next parking trajectory in a first direction.

For descriptions of the first direction, refer to the foregoing embodiment. Details are not described herein again.

For example, the current parking trajectory of the vehicle may be the parking trajectory 1, the next parking trajectory may be the parking trajectory 2, and the reversal trajectory may be the reversal trajectory 1.

S630: Before the vehicle travels to an end point of the current parking trajectory, control the vehicle to steer and control the vehicle to adjust a gear based on the next parking trajectory.

In an embodiment, before traveling to the end point of the current parking trajectory, the vehicle is controlled, based on a transverse steering angle corresponding to the reversal trajectory, to steer.

In an embodiment, before traveling to the end point of the current parking trajectory, the vehicle is controlled to adjust the gear based on a gear corresponding to the next parking trajectory.

Controlling the vehicle to steer and controlling the vehicle to adjust the gear may be performed simultaneously, or controlling the vehicle to steer may be performed before controlling the vehicle to adjust the gear, or controlling the vehicle to adjust the gear may be performed before controlling the vehicle to steer.

In an embodiment, trigger conditions for controlling the vehicle to steer and controlling the vehicle to adjust the gear may be different.

For example, when a distance from the end point of the current parking trajectory is less than or equal to a preset distance, the vehicle is controlled, based on the next parking trajectory, to steer; or when remaining parking duration during which the vehicle travels to the end point is less than or equal to preset duration, the vehicle is controlled, based on the next parking trajectory, to steer.

For example, when a speed of the vehicle is less than or equal to a preset vehicle speed, the vehicle may be controlled to adjust the gear.

In an embodiment, trigger conditions for controlling the vehicle to steer and controlling the vehicle to adjust the gear may be the same.

For example, when the speed of the vehicle is less than or equal to the preset vehicle speed, the vehicle may be controlled to adjust the gear (for example, from a D gear to an R gear). When the gear is adjusted, the vehicle may be controlled, based on a transverse steering angle of the next trajectory, to steer.

S640: Determine whether the current parking trajectory is a last parking trajectory.

If the current parking trajectory is the last parking trajectory, S650 is performed. If the current parking trajectory is not the last parking trajectory, the next parking trajectory is used as the current parking trajectory, and S620 is performed again.

S650: Determine whether the vehicle reaches a target pose.

For example, the vehicle is parked in a target parking space. The target pose may be a pose of the vehicle that is parked in the target parking space.

For example, the vehicle is parked out of the target parking space. The target pose may be an pose that is planned by the vehicle for the vehicle that is parked out of the target parking space, or the target pose may be an pose that is selected by a user for the vehicle that is parked out of the target parking space.

If the vehicle reaches the target pose, parking is completed. Otherwise, the vehicle may return to perform S650 again.

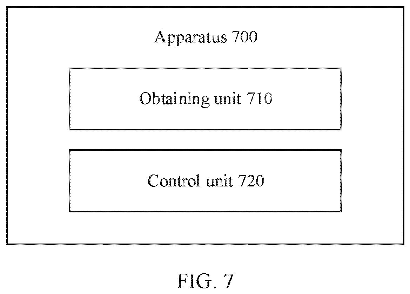

FIG. 7 is a block diagram of a control apparatus 700 according to an embodiment of this application. As shown in FIG. 7, the apparatus 700 includes: an obtaining unit 710, configured to obtain a first parking trajectory and a second parking trajectory, where an end point of the first parking trajectory is a start point of the second parking trajectory, a vehicle is in a first gear in the first parking trajectory, the vehicle is in a second gear in the second parking trajectory, and the first gear is different from the second gear; and a control unit 720, configured to: before the vehicle travels to the end point based on the first parking trajectory, control, based on the second parking trajectory, the vehicle to steer.

Optionally, the control unit 720 is configured to: reverse the second parking trajectory in a first direction to obtain a first reversal trajectory, where the first direction is perpendicular to a tangent direction at the end point of the first parking trajectory; and control, based on the first reversal trajectory, the vehicle to steer.

Optionally, the control unit 720 is further configured to: before the vehicle travels to the end point based on the first parking trajectory, control, based on the second parking trajectory, the vehicle to shift from the first gear to the second gear.

Optionally, the apparatus 700 further includes a determining unit, configured to: before the vehicle is controlled to shift from the first gear to the second gear, determine that a speed of the vehicle is less than or equal to a preset speed.

Optionally, the apparatus 700 further includes a detection unit, configured to: before the obtaining unit obtains the first parking trajectory and the second parking trajectory, detect that an auto parking function is enabled.

Optionally, the control unit 720 is configured to: when a distance between the vehicle and the end point is less than or equal to a preset distance, control, based on the second parking trajectory, the vehicle to steer; or when remaining parking duration during which the vehicle travels to the end point is less than or equal to preset duration, control, based on the second parking trajectory, the vehicle to steer.

For example, the obtaining unit 710 may be the computing platform in FIG. 1, or a processing circuit, a processor, or a controller on the computing platform. For example, the obtaining unit 710 is the processor 151 on the computing platform in FIG. 1. The processor 151 may obtain the first parking trajectory and the second parking trajectory.

For example, the processor 151 may plan, based on data collected by a sensor outside a vehicle cockpit and a current pose of the vehicle, a parking trajectory for parking from a current position of the vehicle into a target parking space. The parking trajectory may include the first parking trajectory and the second parking trajectory.

For another example, the processor 151 may control a transceiver to send data collected by a sensor outside a vehicle cockpit and a current pose of the vehicle to a cloud server, the cloud server determines, based on the data collected by the sensor outside the vehicle cockpit and the current pose of the vehicle, a parking trajectory for parking from a current position of the vehicle into a target parking space. The processor 151 may control the transceiver to receive the parking trajectory.

For another example, the control unit 720 may be the computing platform in FIG. 1, or a processing circuit, a processor, or a controller on the computing platform in FIG. 1. For example, the control unit 720 is the processor 152 on the computing platform. The processor 152 may control, based on the first parking trajectory obtained by the processor 151, the vehicle to travel along the first parking trajectory. Before controlling the vehicle to travel to the end point of the first parking trajectory, the processor 152 may control the vehicle, based on the second parking trajectory, to steer.

A function implemented by the obtaining unit 710 and a function implemented by the control unit 720 may be implemented by different processors, or may be implemented by a same processor. This is not limited in embodiments of this application.

It should be understood that division of the units in the foregoing apparatus is merely logical function division. During an actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

Each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated together and implemented in a form of a SoC. The SoC may include at least one processor, configured to implement any one of the foregoing methods or implement functions of the units in the apparatus. Types of the at least one processor may be different, for example, including a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, if the apparatus is located in a vehicle, the processing unit may be the processors 151 to 15n shown in FIG. 1.

An embodiment of this application further provides a control system. The control system includes one or more sensors and a computing platform. The computing platform includes the foregoing apparatus.

For example, the one or more sensors may be located in a vehicle, and the computing platform may be located in a cloud server or the vehicle.

An embodiment of this application further provides a vehicle. The vehicle may include the foregoing apparatus or the foregoing control system.

An embodiment of this application further provides a computer program product. The computer program product includes computer program code, and when the computer program code is run on a computer, the computer is enabled to perform the control method.

An embodiment of this application further provides a computer-readable medium. The computer-readable medium stores program code, and when the computer program code is run on a computer, the computer is enabled to perform the control method.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be further understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
obtaining a first parking trajectory and a second parking trajectory, wherein an end point of the first parking trajectory is a start point of the second parking trajectory, a vehicle is in a first gear in the first parking trajectory, the vehicle is in a second gear in the second parking trajectory, and the first gear is different from the second gear; and
before the vehicle travels to the end point based on the first parking trajectory, controlling, based on the second parking trajectory, the vehicle to steer.

2. The method according to claim **1,** wherein the controlling, based on the second parking trajectory, the vehicle to steer comprises:
reversing the second parking trajectory in a first direction to obtain a first reversal trajectory, wherein the first direction is perpendicular to a tangent direction at the end point of the first parking trajectory; and
controlling, based on the first reversal trajectory, the vehicle to steer.

3. The method according to claim 1 or 2, wherein the method further comprises:
before the vehicle travels to the end point based on the first parking trajectory, controlling, based on the second parking trajectory, the vehicle to shift from the first gear to the second gear.

4. The method according to claim 3, wherein before the controlling the vehicle to shift from the first gear to the second gear, the method further comprises:
determining that a speed of the vehicle is less than or equal to a preset speed.

5. The method according to any one of claims 1 to 4, wherein before the obtaining a first parking trajectory and a second parking trajectory, the method further comprises:
detecting that an auto parking function is enabled.

6. The method according to any one of claims 1 to 5, wherein before the vehicle travels to the end point based on the first parking trajectory, the controlling, based on the second parking trajectory, the vehicle to steer comprises:
when a distance between the vehicle and the end point is less than or equal to a preset distance, controlling, based on the second parking trajectory, the vehicle to steer; or
when remaining parking duration in which the vehicle travels to the end point is less than or equal to preset duration, controlling, based on the second parking trajectory, the vehicle to steer.

7. A control apparatus, comprising:
an obtaining unit, configured to obtain a first parking trajectory and a second parking trajectory, wherein an end point of the first parking trajectory is a start point of the second parking trajectory, a vehicle is in a first gear in the first parking trajectory, the vehicle is in a second gear in the second parking trajectory, and the first gear is different from the second gear; and
a control unit, configured to: before the vehicle travels to the end point based on the first parking trajectory, control, based on the second parking trajectory, the vehicle to steer.

8. The apparatus according to claim 7, wherein the control unit is configured to:
reverse the second parking trajectory in a first direction to obtain a first reversal trajectory, wherein the first direction is perpendicular to a tangent direction at the end point of the first parking trajectory; and
control, based on the first reversal trajectory, the vehicle to steer.

9. The apparatus according to claim 7 or 8, wherein the control unit is further configured to:
before the vehicle travels to the end point based on the first parking trajectory, control, based on the second parking trajectory, the vehicle to shift from the first gear to the second gear.

10. The apparatus according to claim 9, wherein the apparatus further comprises:
a determining unit, configured to: before the control unit controls the vehicle to shift from the first gear to the second gear, determine that a speed of the vehicle is less than or equal to a preset speed.

11. The apparatus according to any one of claims 7 to 10, wherein the apparatus further comprises:
a detection unit, configured to: before the obtaining unit obtains the first parking trajectory and the second parking trajectory, detect that an auto parking function is enabled.

12. The apparatus according to any one of claims 7 to 11, wherein the control unit is configured to:
when a distance between the vehicle and the end point is less than or equal to a preset distance, control, based on the second parking trajectory, the vehicle to steer; or
when remaining parking duration in which the vehicle travels to the end point is less than or equal to preset duration, control, based on the second parking trajectory, the vehicle to steer.

13. A control apparatus, comprising:
a memory, configured to store a computer program; and
a processor, configured to execute the computer program stored in the memory, for the apparatus to perform the method according to any one of claims 1 to 6.

14. A vehicle, comprising the control apparatus according to any one of claims 7 to 13.

15. A computer-readable storage medium, wherein the computer-readable storage medium stores a computer program; and when the computer program is executed by a computer, the method according to any one of claims 1 to 6 is implemented.

16. A chip, comprising a circuit, wherein the circuit is configured to perform the method according to any one of claims 1 to 6.
